(19) Europäisches Patentamt / European Patent Office / Office européen des brevets

(11) **EP 3 121 522 B1**

(12) **EUROPEAN PATENT SPECIFICATION**

(45) Date of publication and mention
of the grant of the patent:
**31.10.2018 Bulletin 2018/44**

(21) Application number: **15764185.3**

(22) Date of filing: **05.03.2015**

(51) Int Cl.:
*F24D 11/02* (2006.01)          *F24H 1/00* (2006.01)
*F28D 20/02* (2006.01)

(86) International application number:
**PCT/JP2015/001162**

(87) International publication number:
**WO 2015/141163 (24.09.2015 Gazette 2015/38)**

(54) **METHOD FOR CONTROLLING A HEAT STORAGE DEVICE AND METHOD FOR CONTROLLING A HOT WATER GENERATION DEVICE**

VERFAHREN ZUR STEUERUNG EINER WÄRMESPEICHERVORRICHTUNG UND VERFAHREN ZUR STEUERUNG EINER WARMWASSERERZEUGUNGSVORRICHTUNG

PROCÉDÉ DE PILOTAGE D'UN DISPOSITIF D'ACCUMULATION DE CHALEUR ET PROCÉDÉ DE PILOTAGE D'UN DISPOSITIF DE PRODUCTION D'EAU CHAUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2014 JP 2014054636**

(43) Date of publication of application:
**25.01.2017 Bulletin 2017/04**

(73) Proprietor: **Panasonic Intellectual Property Management Co., Ltd.**
**Osaka-shi, Osaka 540-6207 (JP)**

(72) Inventors:
• **NAKAYAMA, Tatsuo**
**Osaka-shi,**
**Osaka 540-6207 (JP)**

• **ANDOU, Tosiaki**
**Osaka-shi,**
**Osaka 540-6207 (JP)**

(74) Representative: **Eisenführ Speiser**
**Patentanwälte Rechtsanwälte PartGmbB**
**Postfach 31 02 60**
**80102 München (DE)**

(56) References cited:
**EP-A1- 0 044 998          EP-A2- 2 543 949
JP-A- H0 842 984          JP-A- S5 833 097
JP-A- S5 833 097          JP-A- H01 306 756
JP-A- 2003 232 563       JP-A- 2009 103 429
JP-A- 2009 115 426       JP-A- 2012 007 796
JP-A- 2012 007 796       JP-A- 2013 067 720
JP-B2- 3 903 804          US-A1- 2014 060 794**

**Description**

[TECHNICAL FIELD]

The present invention relates to a heat storage device using a latent heat storage material, and a hot water generation device provided with the heat storage device.

[BACKGROUND TECHNIQUE]

There are conventionally known heat storage devices in which a plurality of latent heat storage materials having different melting points are used, and heat storage materials are placed in a melting point lowering order (see patent document 1 for example).

In this heat storage device, when heat is stored, fluid is made to flow from the heat storage material having a higher melting point to the heat storage material having a lower melting point. Hence, even if fluid radiates heat to the heat storage material in the heat storage device and temperature of the fluid decreases, since a melting point of the downstream side heat storage material is lower, a difference between the fluid temperature and the stored heat temperature of the heat storage material can be maintained at a predetermined temperature difference. As a result, a stored heat amount of the heat storage device can be increased.

When the heat storage device radiates heat, i.e., when heat is utilized, fluid is made to flow from a heat storage material having a lower melting point to a heat storage material having a higher melting point to produce fluid of predetermined temperature. Hence, even if fluid absorbs heat from the heat storage material in the heat storage material and temperature of the fluid rises, since a melting point of the downstream side heat storage material is higher, a difference between the fluid temperature and the stored heat temperature of the heat storage material can be maintained constant. As a result, an amount of absorbed heat of fluid can be increased.

Further, there is a conventional hot water generation device using the heat storage device having a heat pump heat source in addition to the heat storage device (see patent document 2 for example).

According to this hot water generation device, when heat is stored, heating medium heated by the heat pump heat source is made to flow through heat storage materials in a temperature lowering order, thereby storing heat in the heat storage materials. When heat is utilized, heating medium is made to flow through the heat storage materials in a temperature rising order, thereby heating the heating medium. The heated heating medium is supplied to a hot water supply terminal or the like.

Patent document 3 forming the closest prior art from which the present invention starts, describes a heat storage apparatus to store heat generated by a heat generator via a medium which includes: a first circuit closed to circulate the medium therethrough in a direction, a heat exchanger to exchange the heat, a heat storage tank including a phase change material to exchange heat with the medium, a first measurement unit to measure a temperature of the medium, a cooling unit to cool the medium when the temperature of the medium is higher than a predetermined target temperature and to set the temperature of the medium to be approximately equal to the target temperature, a count unit to count an elapsed time from when the phase change material exchanges heat with the medium and starts a phase change, and a determination unit to determine whether the phase change material is allowed to be supercooled or not based on the elapsed time.

[PRIOR ART DOCUMENTS]

[PATENT DOCUMENTS]

[Patent Document 1] Japanese Patent Application Laid-open No.S58-33097
[Patent Document 2] Japanese Patent Publication No.3903804
[Patent Document 3] US Patent Application 2014/0060794

[SUMMARY OF THE INVENTION]

[PROBLEM TO BE SOLVED BY THE INVENTION]

In the above-described conventional configurations, control of temperature of heating medium which is made flow into the latent heat storage material is not especially described. Here, when heat is stored in the latent heat storage material, as the heat storing operation proceeds, temperature of heating medium which flows out from the heat storage device rises. Especially when phase-change of the latent heat storage material is completed and heat is exchanged in a sensible heat region, an absorbed heat amount of the latent heat storage material per unit time is gradually reduced as compared with a latent heat region, and temperature of heating medium which flows out from the heat storage device rises. Hence, there are problems that heat cannot be stored while sufficiently utilizing a heat amount of high temperature heating medium which flows into the latent heat storage material, and that energy efficiency of heating means which heats the heating medium is deteriorated.

The present invention has been accomplished to solve the above-described problem, and it is an object of the invention to provide a heat storage device having excellent energy saving performance capable of storing heat while effectively using a heat amount of heating medium heated by heating means, and to provide a hot water generation device provided with the heat storage device.

[MEANS FOR SOLVING THE PROBLEM]

To solve the conventional problem, the present invention provides a method for controlling a heat storage device according to claim 1.

According to this, since heating medium having a heat amount which is necessary for storing heat is produced by the heating means in accordance with a heat storage state of the latent heat storage material, it is possible to effectively utilize the heat amount.

[EFFECT OF THE INVENTION]

According to this, since heat can be stored in the heat storage device while highly maintaining energy efficiency of the heating means, it is possible to provide a heat storage device having excellent energy saving performance and to provide a hot water generation device provided with the heat storage device.

[BRIEF DESCRIPTION OF THE DRAWINGS]

Fig. 1 is a schematic block diagram of a hot water generation device provided with a heat storage device in a first embodiment of the present invention;
Figs. 2 are graphs showing temperature change of latent heat storage material when heat is stored in the heat storage device;
Fig. 3 is a control flowchart of a heat storing operation mode of the heat storage device;
Fig. 4 is a schematic block diagram of a hot water generation device provided with a heat storage device in a second embodiment of the present invention; and
Fig. 5 is a graph showing a temperature distribution of heat storage means when a heat storing operation mode and a heating operation mode are carried out in the hot water generation device.

[MODE FOR CARRYING OUT THE INVENTION]

A first aspect of the present invention provides a method for controlling a heat storage device according to claim 1.

According to this, since heating medium having a heat amount which is necessary for storing heat is produced by the heating means in accordance with a heat storage state of the latent heat storage material, it is possible to effectively utilize the heat amount. Further, since heating medium having a heat amount which is necessary for storing heat is produced by the heating means, it is possible to maintain, at a low level, temperature of heating medium which flows out from the heat storage means and which again flows into the heating means. Hence, it is possible to highly maintain the heat exchanging efficiency when the heating medium is heated by the heating means. As a result, since it is possible to store heat in the heat storage device while highly maintain the energy efficiency of the heating means, it is possible to provide a heat storage device having excellent energy saving performance.

The control device may decrease the heating temperature when the stored heat amount of the heat storage means exceeds a predetermined amount in the heat storing operation mode. The stored heat amount into the heat storage means can be determined based on elapsed time in the heat storing operation mode or based on temperature or the like of heating medium which flows out from the heat storage means. When temperature of heating medium which flows out from the heat storage means is relatively high, the control device may decrease the heating temperature. When temperature of heating medium which flows out from the heat storage means becomes equal to predetermined temperature or higher, the control device may decrease the heating temperature. As described above, the heating temperature is decreased if the heat storing operation into the latent heat storage material proceeds and the absorbed heat amount from the heating medium of the latent heat storage material is reduced and temperature of the heating medium which flows out from the heat storage means after heat exchange rises. According to this, since heat can be stored in the heat storage device while highly maintain the energy efficiency of the heating means, it is possible to provide a heat storage device having excellent energy saving performance.

According to a second aspect of the invention, which forms the invention in combination with the first aspect, the heat storage means includes a plurality of latent heat storage materials having different melting points, the heating medium flows through the heat storage means in the heat storing operation mode such that heat exchange is carried out in the plurality of latent heat storage materials in a melting point-lowering order, the control device controls the heating means such that the heating temperature becomes higher than a highest first melting point among the melting points of the latent heat storage materials which are objects of heat storage, and when the heat storage state is determined, the control device lowers ability of the heating means such that the heating temperature does not become equal to or lower than the first melting point.

According to this, it is possible to suppress, to a low level, outlet temperature of the heating medium which flows out from the heat storage means, and temperature of heating medium which returns to the heating means is decreased. Therefore, it is possible to highly maintain the heat exchange efficiency when heating medium is heated by the heating means.

According to a third aspect of the invention, in the first or second aspect, in the heat storing operation mode, when the heat storage state is determined, the control device reduces a flow rate of the heating medium which flows into the heat storage means.

According to this, it is possible to use a necessary flow rate of heating medium having a heat amount which is necessary for storing heat in accordance with a heat storage state of the latent heat storage material. Hence, even when a temperature difference between the heating medium and the latent heat storage material is small, it is possible to increase the heat radiation amount into the latent heat storage material of the heating medium. Therefore, it is possible to maintain, at a low level, temperature of the heating medium which flows out from the heat storage means. As a result, since temperature (returning temperature) of the heating medium which flows into the heating means is also decreased, it is possible to highly maintain the energy efficiency when the heating means heats the heating medium.

According to a fourth aspect of the invention, especially in any one of the first to third aspects, the heating means is a heat pump device formed by annularly connecting a compressor, a heating medium heat exchanger in which refrigerant and the heating medium exchange heat, decompressing means, and a heat source-side heat exchanger to one another through a refrigerant pipe.

According to this, since an enthalpy difference between an inlet and an outlet of the heating medium heat exchanger (radiator) of refrigerant becomes large, it is possible to highly maintain the energy efficiency of the heat pump.

A fifth aspect of the invention provides a hot water generation device comprising the heat storage device according to any one of the first to fourth aspects, wherein the control device executes a heating operation mode in which the heating medium is heated by heat stored in the heat storage device, and in which the heated heating medium is supplied to a heat utilizing terminal.

According to this, it is possible to provide a heat storage device having excellent energy saving performance.

Embodiments of the present invention will be described below with reference to the drawings. The invention is not limited to the embodiments.

(First Embodiment)

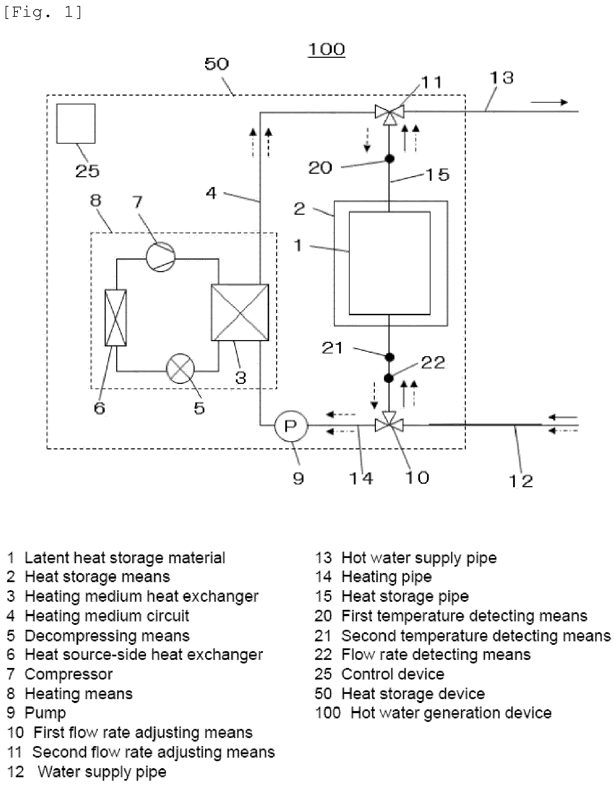

Fig. 1 is a block diagram of a heat storage device 50 and a hot water generation device 100 having the heat storage device 50 in a first embodiment. This heat storage device 50 includes a heating medium circuit 4 through which water as heating medium circulates, and heating means 8 for heating the heating medium. The heating medium circuit 4 is provided with heat storage means 2 having latent heat storage material 1. Heat is stored in the heat storage means 2 by exchanging heat between the heat storage means 2 and heating medium. The heat storage device 50 stores heat in the latent heat storage material 1 by heating medium which is heated by the heating means 8 and which flows through the heating medium circuit 4.

A water supply pipe 12 is connected to the heating medium circuit 4. Heating medium is supplied to the heating medium circuit 4 through the water supply pipe 12. The hot water generation device 100 carries out a heating operation mode in which heating medium supplied from the water supply pipe 12 is heated by heat of the latent heat storage material 1.

The hot water generation device 100 can heat water supplied from the water supply pipe 12 connected to the heating medium circuit 4 by the heating means 8 and/or heat storage means 2, and can produce hot water. Hot water heated by the heating means 8 can be used to store heat in the heat storage means 2. Hot water heated by the heating means 8 and/or the heat storage means 2 is supplied to a heat-utilizing terminal such as a faucet, a bathtub and a heating terminal from a hot water supply pipe 13 connected to the heating medium circuit 4.

The heating means 8 in this embodiment is a heat pump device configured by annularly connecting a compressor 7, a heating medium heat exchanger (radiator) 3, decompressing means (expansion valve) 5 and a heat source-side heat exchanger (evaporator) 6 to one another in this order through refrigerant pipes. The heating medium heat exchanger 3 includes a refrigerant flow path (not shown) through which refrigerant flows and a heating medium flow path (not shown) through which heating medium flows. In the heating medium heat exchanger 3, heat is exchanged between refrigerant which flows through the refrigerant flow path and heating medium which flows through the heating medium flow path. The heat source-side heat exchanger 6 functions as an evaporator. In this embodiment, the heat source-side heat exchanger 6 is an air heat exchanger which exchanges heat between air and refrigerant which flows through the heat pump device. The heating means 8 includes a fin (not shown) for blowing wind to the heat source-side heat exchanger 6. Carbon dioxide and HFC refrigerant are used as the refrigerant.

The heating means 8 is not limited to the heat pump device only if the heating means 8 has a function to heat heating medium. A combustion device and an electric heater can be used as the heating means 8.

The heating medium circuit 4 is configured by annularly connected the heat storage means 2, the heating medium heat exchanger 3, a pump 9 as transfer means and flow rate adjusting means (first flow rate adjusting means 10 and second flow rate adjusting means 11) to one another through water pipes (heating pipe 14 and heat storage pipe 15). The first flow rate adjusting means (first flow rate adjusting valve) 10 connects one end of the heating pipe 14 and one end of the heat storage pipe 15 to each other. Second flow rate adjusting means (second flow rate adjusting valve) 11 connected the other end of the heating pipe 14 and the other end of the heat storage pipe 15 to each other. The water supply pipe 12 is connected to the first flow rate adjusting means (first flow rate adjusting valve) 10. The hot water supply pipe 13 is connected to the second flow rate adjusting means (second flow rate adjusting valve) 11. The heating medium heat exchanger 3 is placed in the heating pipe 14, and the heat storage means 2 is placed in the heat storage pipe 15.

One end of the water supply pipe 12 is connected to a water pipe, and water flows in from the water pipe. The other end of the water supply pipe 12 is connected to the first flow rate adjusting means (first flow rate adjusting valve) 10. One end of the hot water supply pipe 13 is connected to the heat utilizing terminal, and hot water is supplied to the heat utilizing terminal. The heat utilizing terminal is a hot water supply terminal such as a bathtub and a faucet, or a heating terminal such a floor heating panel. The other end of the hot water supply pipe 13 is connected to the second flow rate adjusting means (second flow rate adjusting valve) 11.

According to this, the heating medium heat exchanger 3 and the heat storage means 2 are placed in parallel to each other between the water supply pipe 12 and the hot water supply pipe 13. Since the heating pipe 14 and the heat storage pipe 15 are annularly connected to each other through the flow rate adjusting means (first flow rate adjusting means 10 and second flow rate adjusting means 11), the heating medium circuit 4 functions as a heat storage circuit. The pump 9 as transfer means makes heating medium circulate. It is preferable that the pump 9 is provided in the heating pipe 14 between the first flow rate adjusting means 10 and the heating medium heat exchanger 3 in the heat storage circuit.

The first flow rate adjusting means 10 adjusts a flow rate of water flowing through the water supply pipe 12, the heating pipe 14 and the heat storage pipe 15. The second flow rate adjusting valve 11 adjusts a flow rate of water flowing through the heating pipe 14, the heat storage pipe 15 and the hot water supply pipe 13.

The heat storage means 2 includes the latent heat storage material 1 and a heating medium flow path through which heating medium flows, and the heating medium and the latent heat storage material 1 exchange heat. In the heating operation mode, a heat amount possessed by the heat storage means 2 heats heating medium, and in the heat storing operation mode, heat is stored in the heat storage means 2 by heated heating medium.

The heat storage means 2 of this embodiment includes the latent heat storage material 1. As the latent heat storage material 1, it is possible to use thiosulfuric acid sodium 5-hydrate, sodium acetate 3-hydrate, sodium sulfate 10-hydrate and sodium sulfate n hydrate (wherein, n is integer and n>10). A melting point of the thiosulfuric acid sodium 5-hydrate is 48°C, a melting point of the sodium acetate 3-hydrate is 58°C, and a melting point of the sodium sulfate 10-hydrate is 32°C. When the hot water generation device 100 which supplies hot water to the heat utilizing terminal is used, it is preferable that sodium acetate 3-hydrate is used as the latent heat storage material 1.

Next, an action of the hot water generation device 100 will be described. The hot water generation device 100 can execute the heat storing operation mode in which the heating means 8 heats water to produce hot water, and heat is stored in the heat storage means 2 by the produced hot water. Further, the hot water generation device 100 can execute a plurality of heating operation modes in which heating medium is heated to produce hot water. The plurality of heating operation modes include a first heating operation mode for heating water by the heat storage means 2, and a second heating operation mode for heating water using both the heating means 8 and the heat storage means 2. A control device 25 controls the operation modes.

The heat storage pipe 15 is provided with at least one temperature detecting means (first temperature detecting means 20, second temperature detecting means 21) on each of both sides of the heat storage means 2. The temperature detecting means (first temperature detecting means 20, second temperature detecting means 21) detects temperature of heating medium flowing through the heat storage pipe 15. The first temperature detecting means 20 is provided in the heat storage pipe 15 between the heat storage means 2 and the first flow rate adjusting means 10, and the second temperature detecting means 21 is provided in the heat storage pipe 15 between the heat storage means 2 and the second flow rate adjusting means 11. The first temperature detecting means 20 detects temperature (inlet temperature) of heating medium which flows into the heat storage means 2 in the heat storing operation mode, and detects temperature (outlet temperature) of heating medium which flows out from the heat storage means 2 in the heating operation mode. On the other hand, the second temperature detecting means 21 detects temperature (outlet temperature) of heating medium which flows out from the heat storage means 2 in the heat storing operation mode, and detects temperature (inlet temperature) of heating medium which flows into the heat storage means 2 in the heating operation mode. The heat storage pipe 15 is provided with flow rate detecting means 22 which detects a flow rate of heating medium flowing through the heat storage pipe 15. In this embodiment, the flow rate detecting means 22 is provided on the heat storage pipe 15 on a side where the second temperature detecting means 21 is provided. That is, the flow rate detecting means 22 is provided on the heat storage pipe 15 on a side where heating medium after it exchanges heat with the latent heat storage material 1 flows in the heat storing operation mode.

The control device 25 controls the ability of the heating means 8, heating temperature of heating medium carried out by the heating means 8 and a flow rate of heating medium by the pump 9 based on temperatures and flow rates detected by the first temperature detecting means 20, the second temperature detecting means 21 and the flow rate detecting means 22.

In the heat storing operation mode, the control device 25 controls the pump 9, the first flow rate adjusting means 10 and the second flow rate adjusting valve 11 such that water flows in directions shown by broken line arrows in Fig. 1. According to this, water circulates through the heat storage circuit to which the heating pipe 14 and the heat storage pipe 15 are annularly connected.

In the heat storing operation mode, the control device 25 controls the compressor 7, decompressing means 5 and a fan, and supplies high temperature and high pressure refrigerant to the heating medium heat exchanger 3.

High temperature heating medium (high temperature water) produced by exchanging heat with high temperature and high pressure refrigerant in the heating medium heat exchanger 3, i.e., high temperature heating medium (high temperature water) heated to predetermined heating temperature flows through the heating pipe 14, and flows into the heat storage pipe 15 through the second flow rate adjusting valve 11. Hot water flowing through the heat storage pipe 15 exchanges heat with the latent heat storage material 1 in the heat storage means 2. According to this, heat is stored in the latent heat storage material 1. Heating medium (water) which radiates heat to the latent heat storage material 1 and whose temperature is decreased flows into the heating pipe 14 through the first flow rate adjusting means 10, and is again heated by the heating medium heat exchanger 3. Such action are repeated, heating medium circulates through the heat storage circuit and heat is stored in the heat storage means 2.

The first heating operation mode in which water is heated using heat stored in the heat storage means 2 to produce hot water will be described.

In the first heating operation mode, the control device 25 controls the first flow rate adjusting means 10 and the second flow rate adjusting valve 11 such that water flows in directions shown by solid line arrows in Fig. 1. According to this, water supplied from the water supply pipe 12 flows into the heat storage pipe 15 by the first flow rate adjusting means 10, and flows into the hot water supply pipe 13 by the second flow rate adjusting valve 11. Water flowing through the heat storage pipe 15 exchanges heat with the latent heat storage material 1 in the heat storage means 2, and is heated. Hot water heated by the heat storage means 2 and produced flows into the hot water supply pipe 13 through the second flow rate adjusting valve 11, and is supplied to the heat utilizing terminal.

The second heating operation mode in which water is heated using both the heating means 8 and the heat storage pipe 15 will be described.

In the second heating operation mode, the control device 25 controls the first flow rate adjusting means 10 and the second flow rate adjusting valve 11 such that water flows in directions shown by chain line arrows in Fig. 1. At this time, the pump 9 may be operated. According to this, water supplied from the water supply pipe 12 branches into both the heating pipe 14 and the heat storage pipe 15 by the first flow rate adjusting means 10. Water flowing through the heating pipe 14 is heated by the heating means 8, and water flowing through the heat storage pipe 15 is heated by the heat storage means 2. Hot water produced by the heating means 8 and hot water produced by the heat storage means 2 are mixed by the second flow rate adjusting means 11, and the mixed hot water flows into the hot water supply pipe 13.

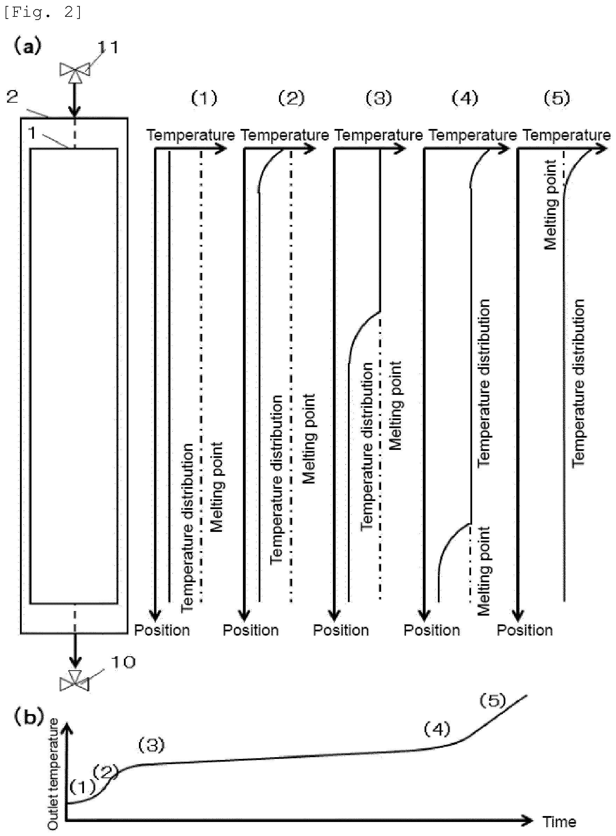

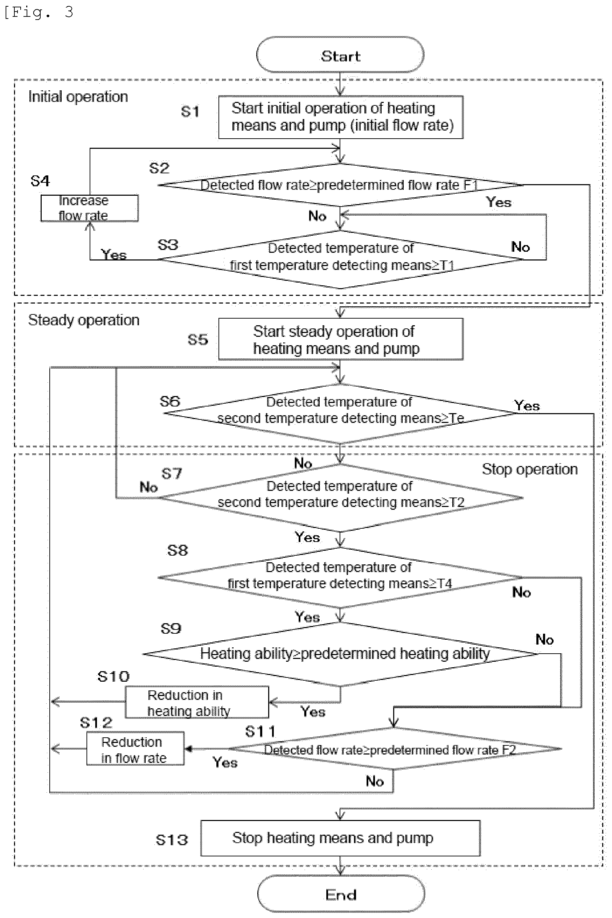

Next, control of the heat storing operation mode which is carried out in accordance with temperature change (phase change) of the latent heat storage material 1, and a heat storage state of the latent heat storage material 1 in the heat storing operation mode will be described using Figs. 2 and 3.

In the heat storing operation mode, temperature (inlet temperature) of heating medium which is made to flow into the heat storage means 2 is made higher, by predetermined temperature, than a melting point of the latent heat storage material 1 incorporated in the heat storage means 2.

First, temperature change (phase change) and its temperature distribution of the latent heat storage material 1 in the heat storing operation mode will be described using Figs. 2. Fig. 2(a) is a diagram showing elapsed time of the temperature change (phase change) of the latent heat storage material 1 in the heat storing operation mode. As shown in Fig. 2(a), temperature in the latent heat storage material 1 changes from (1) to (5) in Fig. 2(a). Fig. 2(b) is a diagram showing change of temperature (outlet temperature) of heating medium which flows out from the heat storage means 2 when the heat storing operation mode is carried out.

When the heat storing operation mode is started, temperature of the latent heat storage material 1 is lower than the melting point, and a state of the latent heat storage material 1 is uniform (Fig. 2(a)(1)). If high temperature heating medium heated by the heating means 8 flows into the heat storage means 2, the most upstream side of the latent heat storage material 1 exchanges heat in a sensible heat region and heat is stored, and temperature rises (Fig. 2(a)(2)). Thereafter, the latent heat storage material 1 reaches the melting point from its upstream side, heat is exchanged in a latent heat region and heat is stored (Fig. 2(a)(3)).

If a region where heat is exchanged in the latent heat region in the latent heat storage material 1 is increased, temperature of the upstream side becomes higher than the melting point before a downstream side of the latent heat storage material 1 exchanges heat in the latent heat region, and heat exchange in the sensible heat region starts in some cases (Fig. 2(a)(4)). Thereafter, temperature of the entire region of the latent heat storage material 1 becomes equal to or higher than the melting point, the heat storage in the latent heat region is completed, the latent heat storage material 1 enters the sensible heat region and its temperature rises, and the temperature becomes close to the inlet temperature of the heating medium (Fig. 2(a)(5)). Sometimes, there is another case that after the entire latent heat storage material 1 becomes the latent heat region without through the process of Fig. 2(a)(4), and temperature of the upstream side becomes the sensible heat region which is higher than the melting point.

At this time, outlet temperature of heating medium of the heat storage means 2 gradually rises as the stored heat amount into the latent heat storage material 1 increases as shown in Fig. 2(b). Here, a rising width of the outlet temperature of the heating medium which flows out from the heat storage means 2 is large when the latent heat storage material 1 is in the sensible heat region (Fig. 2(a)(1) to (3), (4) to (5)), and the rising width of the outlet temperature of the heating medium is small when the latent heat storage material 1 is in the latent heat region (Fig. 2(a)(3) to (4)). When the latent heat storage material 1 is in the latent heat region (Fig. 2 (a) (3) to (4)), the outlet temperature is substantially constant.

In the latent heat storage material 1, the latent heat specific heat is extremely larger than sensible heat specific heat, and heat can be stored in the high density by utilizing the latent heat specific heat. It is not preferable that temperature of the latent heat storage material 1 is made to rise after temperature of the latent heat storage material 1 exceeds the melting point. Therefore, in this embodiment, the heat storing operation mode is provided with a period during which the control device 25 decreases temperature (heating temperature of heating medium heated by heating means 8) of heating medium which flows into the heat storage means 2 in accordance with the heat storage state of the latent heat storage material 1. That is, when temperature of the upstream side of the latent heat storage material 1 becomes equal to or higher than the melting point or becomes higher than the melting point, temperature of heating medium which flows into the heat storage means 2 is decreased, thereby suppressing temperature rise of the upstream portion of the heat storage means 2 as shown in Fig. 2(a)(4)(5), and the heat storing operation mode which effectively utilizes a heat amount of the heating medium can be carried out. It is also possible to restrain outlet temperature of heating medium of the heat storage means 2 from rising.

The heat storing operation mode may be provided with a period during which the control device 25 decreases the heating temperature when the stored heat amount of the latent heat storage material 1 exceeds a predetermined amount. The stored heat amount into the latent heat storage material 1 can be calculated and estimated based on elapsed time (time after heat storing operation is started) of the heat storing operation mode or based on temperature of heating medium which flows out from the heat storage means 2. The heat storing operation mode may be provided with a period during which the control device 25 decreases the heating temperature when temperature of heating medium which flows out from the heat storage means 2 is relatively high, i.e., when a difference between temperature of heating medium which flows into the heat storage means 2 and temperature of heating medium which flows out from the heat storage means 2 is larger than a set value. Further, the heat storing operation mode may be provided with a period during which the control device 25 decreases the heating temperature when temperature of the heating medium which flows out from the heat storage means 2 becomes equal to or higher than predetermined temperature. As described above, a period during which the heating temperature is decreased is provided in accordance with a case where the heat storage into the latent heat storage material 1 proceeds and the absorbed heat amount from heating medium of the latent heat storage material 1 is reduced. According to this, the heat storing operation mode which effectively utilizes the heat amount of the heating medium can be realized.

Since it is possible to restrain outlet temperature of heating medium of the heat storage means 2 from rising, it is also possible to maintain, at a low level, temperature of heating medium which flows into the heating means 8. Therefore, heating efficiency of the heat pump device is enhanced, and the heat storage device 50 having excellent energy saving performance and the hot water generation device 100 having the heat storage device 50 can be realized.

Here, in the heat storing operation mode, to decrease temperature (heating temperature of heating medium heated by heating means 8) of heating medium which flows into the heat storage means 2 means that a temperature difference between heating medium and the latent heat storage material 1 becomes small in the heat storage means 2. Therefore, a heat radiation amount from heating medium to the latent heat storage material 1 becomes small. When temperature of heating medium which flows into the heat storage means 2 is to be decreased, it is preferable that a flow rate of heating medium is reduced by the pump 9. According to this, since flowing speed is lowered and time during which heating medium and the latent heat storage material 1 are in contact with each other becomes long, it is possible to increase the heat exchanging amount between heating medium and the latent heat storage material 1. According to this, it is possible to maintain, at a lower level, outlet temperature of heating medium of the heat storage means 2.

Next, control flow of the heat storing operation mode will be described using Fig. 3. The control device 25 starts operations of the heating means 8 and the pump 9, and starts the heat storing operation mode (S1).

An initial action operation will be described.

In the initial action operation, sufficient heating ability cannot be obtained until a state of a refrigeration cycle of the heating means 8 is stabilized. Hence, until the state of the refrigeration cycle is stabilized, a flow rate of heating medium is set to a minimum flow rate (initial flow rate) which is smaller than that when a later-described steady action operation is carried out. Next, it is determined whether a flow rate detected by the flow rate detecting means 22 is equal to a predetermined flow rate F1 which is larger than the initial flow rate (S2). When the detected flow rate is different from the predetermined flow rate, i.e., when the detected flow rate is less than the predetermined flow rate (No in S2), a procedure proceeds to S3. When the detected flow rate is equal to or larger than the predetermined flow rate (Yes in S2), the procedure proceeds to S5. Since the flow rate is the initial flow rate immediately after the heat storing operation mode is started, the detected flow rate is smaller than a predetermined flow rate F1.

When the detected flow rate in S2 is less than the predetermined flow rate, the first temperature detecting means 20 detects inlet temperature of heating medium which flows into the heat storage means 2, and predetermined temperature T1 and the inlet temperature are compared with each other (S3) for determining whether the initial operation may be completed. If the inlet temperature is equal to or higher than the predetermined temperature T1 (Yes in S3), the flow rate of the heating medium is increased (S4). If the inlet temperature is less than the predetermined temperature T1 (No in S3), the initial action operation is continued. The above actions are continued until the flow rate of heating medium detected by the flow rate detecting means 22 becomes equal to a predetermined flow rate. It is not absolutely necessary to carry out the initial actions in the described order, and the later-described steady operation may be started without through the initial action.

A steady action operation will be described.

When a detected flow rate detected by the flow rate detecting means 22 becomes equal to or larger than the predetermined flow rate (Yes in S2), the procedure is shifted to the steady action operation. In the steady action operation, the control device 25 controls the heating means 8 and the pump 9 (S5) such that temperature of heating medium heated by the heating means 8, i.e., inlet temperature of heating medium which flows into the heat storage means 2 becomes equal to temperature Tg which is higher than a melting point T3 of the latent heat storage material 1 by predetermined temperature (e.g., 10 to 20°C). That is, the predetermined temperature Tg becomes target temperature (heating temperature) of heating medium which is heated by the heating means 8 in the heat storing operation mode. At this time, when the heating means 8 is the heat pump device, the control device 25 appropriately controls the decompressing means 5, the compressor 7 and the fan (not shown) in accordance with conditions such as outside air temperature.

Next, if outlet temperature of heating medium detected by the second temperature detecting means 21 becomes equal to predetermined temperature Te for completing the heat storing operation (Yes in S6), the control device 25 stops the heating means 8 and the pump 9 and completes the heat storing operation. When the outlet temperature of the heating medium detected by the second temperature detecting means 21 is less than the predetermined temperature Te for completing the heat storing operation (No in S6) on the other hand, the procedure proceeds to S7 for determining whether a completion action in accordance with the heat storage state of the latent heat storage material 1 is necessary.

In S7, it is determinded whether outlet temperature of heating medium detected by the second temperature detecting means 21 is equal to or higher than predetermined temperature T2 (S7). The predetermined temperature T2 is higher than the predetermined temperature T1 and lower than the predetermined temperature Te by predetermined temperature (e.g., 10°C) . The predetermined temperature T2 is used for determining whether temperature of heating medium which is to flow into the heat storage means 2 should be decreased. If the outlet temperature of heating medium detected by the second temperature detecting means 21 is less than the predetermined temperature T2 (No in S7), the procedure returns to S6. During this time, heat storage into the latent heat storage material 1 proceeds.

When the outlet temperature of heating medium detected by the second temperature detecting means 21 is equal to or higher than the predetermined temperature T2 (Yes in S7), it is determined that the heat storage into the latent heat storage material 1 proceeds and the state is suitable for decreasing the inlet temperature of heating medium of the heat storage means 2, and the procedure proceeds to S8. In S8, temperature detected by the first temperature detecting means 20 and temperature T4 which is higher than the melting point T3 of the latent heat storage material 1 by predetermined temperature (e.g., 5°C) are compared with each other. Here, it is preferable that the predetermined temperature T4 is lower than the predetermined temperature Tg.

When temperature detected by the first temperature detecting means 20 is equal to or higher than the predetermined temperature T4 (Yes in S8), it is determined whether a heating ability of the heating means 8 is greater than a predetermined heating ability (S9). On the other hand, when the temperature detected by the first temperature detecting means 20 is less than the predetermined temperature T4 (No in S8), the procedure proceeds to S11. Here, it is preferable that the predetermined heating ability is higher, by predetermined ability, than a lowest heating ability which can be realized by the heating means 8.

If the heating ability of the heating means 8 is equal to or higher than the predetermined heating ability (Yes in S9), the heating ability of the heating means 8 is reduced (S10) . If the heating means 8 is a combustion machine, fuel supply is reduced. If the heating means 8 is an electric heater, supply of electricity to the electric heater is reduced. If the heating means 8 is a heat pump device, discharge temperature of the compressor 7 is reduced and/or a circulation amount of refrigerant is reduced. According to this, the heating ability can be reduced, and the inlet temperature of the heat storage means 2 can be decreased.

Instead of S9 and S10, the inlet temperature of heating medium of the heat storage means 2 may be decreased by increasing a transfer amount of heating medium carried out by the pump 9 (flow rate of heating medium flowing through heat storage circuit) . The inlet temperature of heating medium of the heat storage means 2 may be decreased both by reducing the heating ability and increasing the transfer amount of heating medium.

According to this, it is possible to suppress the temperature rise of the upstream side of the heat storage means 2 and to realize the heat storing operation mode which effectively utilizes a heat amount of heating medium as shown in Fig. 2(a)(4) and (5). Further, it is also possible to suppress outlet temperature rise of heating medium of the heat storage means 2.

When temperature detected by the first temperature detecting means 20 in S8 is less than T4, or when heating ability is less than the predetermined heating ability in S9, the procedure proceeds to S11. In S11, it is determined whether a flow rate detected by the flow rate detecting means 22 is equal to or higher than a predetermined flow rate F2. Here, the predetermined flow rate F2 is higher, by a predetermined flow rate, than a minimum flow rate which can be realized by the pump 9. If the detected flow rate is less than the predetermined flow rate F2 (No in S11), the procedure returns to S6. If the detected flow rate is equal to or higher than the predetermined flow rate F2 (Yes in S11), the procedure proceeds to S12, and the flow rate of heating medium is reduced by the pump 9. After the flow rate is reduced, the procedure proceeds to S6.

According to this, outlet temperature of heating medium of the heat storage means 2 can be maintained at a lower level. Therefore, it is possible to maintain, at a low level, temperature of heating medium which flows into the heating means 8, to enhance the heat transfer efficiency in the heating means 8, and to efficiently realize the heat storing operation mode. As a result, it is possible to realize the heat storage device 50 having the excellent energy saving performance, and the hot water generation device 100.

By the above-described control flow, the heat storing operation mode is carried out until the temperature of heating medium which flows out from the heat storage means 2 becomes equal to temperature (predetermined temperature Te) at which the heat storing operation mode is completed.

As described above, during time from start to end of the heat storing operation mode, it is possible to restrain the temperature (outlet temperature) of heating medium at the outlet of the heat storage means 2 from rising. According to this, temperature of heating medium which flows into the heating means 8 is decreased. As a result, when the combustion machine is used as the heating means 8, heating medium is heated by heat from combustion gas. Hence, since temperature of heating medium is decreased, heat transfer efficiency is enhanced. When the heating means 8 is the electric heater, if temperature of heating medium is decreased, temperature of the heater itself is decreased, and radiation loss from the heater body or a support body to outside is reduced. Therefore, heating efficiency is enhanced.

In this embodiment, as the completion action, the following two actions were carried out, i.e., the action for decreasing temperature (inlet temperature) of heating medium which flows into the heat storage means 2, and the action for reducing the flow rate of heating medium. However, it is only necessary to carry out any one of the actions. According to this, even if the heat storing operation mode is being executed, it is possible to suppress temperature rise (outlet temperature rise) of heating medium which flows out from the heat storage means 2, and it is possible to realize the heat storing operation mode having excellent energy efficiency.

In this embodiment, the action for decreasing temperature (inlet temperature) of heating medium which flows into the heat storage means 2 is carried out in preference to the action for reducing the flow rate of heating medium, but this priority may be reversed. That is, in S8, the control flow may be configured such that a detected flow rate and the predetermined flow rate F2 are compared with each other, and if the detected flow rate is smaller than the predetermined flow rate F2, temperature (inlet temperature) of heating medium which flows into the heat storage means 2 is decreased.

(Second Embodiment)

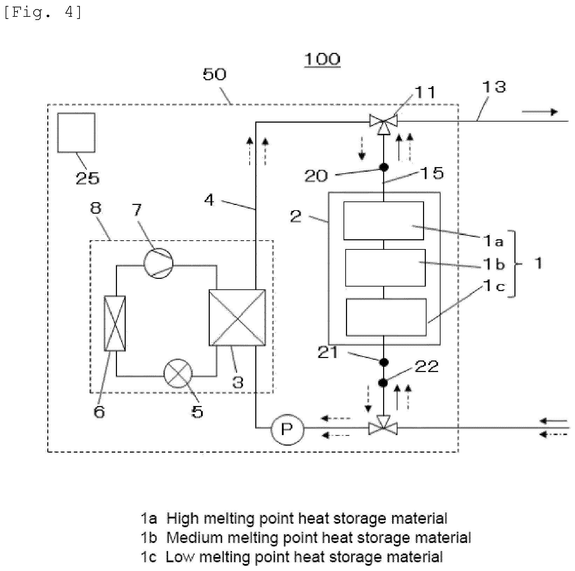

Fig. 4 is a block diagram of a heat storage device 50 and a hot water generation device 100 in a second embodiment. In the second embodiment, the same symbols are allocated to the same members as those of the first embodiment, and detailed description thereof will be omitted.

The heat storage device 50 and the hot water generation device 100 of the second embodiment include a heating medium circuit 4 through which water as heating medium circulates, and heating means 8 for heating the heating medium. The heating medium circuit 4 is provided with heat storage means 2 including a plurality of latent heat storage materials (1a, 1b, 1c) having different melting points. By exchanging heat between the heat storage means 2 and heating medium, heat is stored in the heat storage means 2 and heating medium is heated.

The heat storage means 2 includes the latent heat storage materials (1a, 1b, 1c) having the different melting points, and a heating medium flow path through which heating medium flows, and the heating medium and the latent heat storage materials (1a, 1b, 1c) exchange heat. In a heating operation mode, heating medium is heated by a heat amount of the heat storage means 2. In the heat storing operation mode, heat is stored in the heat storage means 2 by the heated heating medium.

The heat storage means 2 of the second embodiment includes the three latent heat storage materials (1a, 1b, 1c) having the different melting points. As the latent heat storage materials (1a, 1b, 1c), it is possible to use thiosulfuric acid sodium 5-hydrate, sodium acetate 3-hydrate, sodium sulfate 10-hydrate, sodium sulfate n hydrate (wherein n is integer and n>10). A melting point of the thiosulfuric acid sodium 5-hydrate is 48°C, a melting point of the sodium acetate 3-hydrate is 58°C, and a melting point of the sodium sulfate 10-hydrate is 32°C. It is only necessary that the heat storage means 2 is configured using two latent heat storage materials having different melting points, and the heat storage means 2 may be configured using three or more latent heat storage materials having different melting points. When the hot water generation device 100 which supplies hot water to the heat utilizing terminal, it is preferable to use sodium acetate 3-hydrate having a melting point of 58°C as the latent heat storage material 1a.

The three latent heat storage materials (1a, 1b, 1c) are disposed in the following manner. That is, the high melting point heat storage material 1a having the highest melting point is placed on the side of the second flow rate adjusting valve 11, the low melting point heat storage material 1c having the lowest melting point is placed on the side of the first flow rate adjusting means 10. The medium melting point heat storage material 1b having a melting point lower than that of the high melting point heat storage material 1a and higher than that of the low melting point heat storage material 1c is placed between the high melting point heat storage material 1a and the low melting point heat storage material 1c. That is, the latent heat storage materials (1a, 1b, 1c) having the different melting points are arranged in a melting point lowering order. According to this, heating medium exchanges heat with the plurality of latent heat storage materials (1a, 1b, 1c) having the different melting points in the melting point lowering order.

Next, an action of the hot water generation device 100 will be described. The hot water generation device 100 can execute a heat storing operation mode in which water is heated by heating means 8 to produce hot water, and heat is stored in the heat storage means 2 by the produced hot water. Further, the hot water generation device 100 can executes a plurality of heating operation modes in which heating medium is heated to produce hot water. The plurality of heating operation mode includes a first heating operation mode in which water is heated by heat storage pipe 15, and a second heating operation mode in which water is heated using both the heating means 8 and the heat storage pipe 15. A control device 25 controls the operation modes.

In the heat storing operation mode, the control device 25 controls a pump 9, a first flow rate adjusting means 10 and a second flow rate adjusting valve 11 such that water flows in directions shown by broken line arrows in Fig. 4. According to this, water circulates through a heat storage circuit to which a heating pipe 14 and a heat storage pipe 15 are annularly connected.

In the heat storing operation mode, the control device 25 controls a compressor 7, decompressing means 5 and a fan to supply high temperature and high pressure refrigerant to the heating medium heat exchanger 3.

High temperature heating medium (high temperature water) produced by exchanging heat with the high temperature and high pressure refrigerant in the heating medium heat exchanger 3, i.e., high temperature heating medium (high temperature water) heated up to predetermined heating temperature flows through the heating pipe 14 and flows into the heat storage pipe 15 through the second flow rate adjusting valve 11. Hot water flowing through the heat storage pipe 15 exchanges heat with the high melting point heat storage material 1a, the medium melting point heat storage material 1b and the low melting point heat storage material 1c in this order by the heat storage means 2. According to this, heat is stored in the respective latent heat storage materials (1a, 1b, 1c). Heating medium (water) which radiates heat to the latent heat storage materials (1a, 1b, 1c) and whose temperature is decreased flows into the heating pipe 14 through the first flow rate adjusting means 10, and is again heated by the heating medium heat exchanger 3. The above-described actions are repeated, heating medium circulates through the heat storage circuit, thereby storing heat into the heat storage means.

The first heating operation mode in which water is heated using heat stored in the heat storage means 2 to produce hot water will be described.

In the first heating operation mode, the control device 25 controls the first flow rate adjusting means 10 and the second flow rate adjusting valve 11 such that water flows in directions shown by solid line arrows in Fig. 4. According to this, water supplied from the water supply pipe 12 flows into the heat storage pipe 15 by the first flow rate adjusting means 10, and flows into the hot water supply pipe 13 by the second flow rate adjusting valve 11. Water flowing through the heat storage pipe 15 exchanges heat with the low melting point heat storage material 1c, the medium melting point heat storage material 1b and the high melting point heat storage material 1a in this order by the heat storage means 2, and the water is heated. Hot water heated by the heat storage means 2 and is produced flows into the hot water supply pipe 13 through the second flow rate adjusting valve 11, and is supplied to the heat utilizing terminal.

The second heating operation mode in which water is heated by both the heating means 8 and the heat storage pipe 15 to produce hot water will be described.

In the second heating operation mode, the control device 25 controls the first flow rate adjusting means 10 and the second flow rate adjusting valve 11 such that water flows in directions shown by chain line arrows in Fig. 4. At this time, the pump 9 may be operated. According to this, water supplied from the water supply pipe 12 branches into both the heating pipe 14 and the heat storage pipe 15 by the first flow rate adjusting means 10. Water flowing through the heating pipe 14 is heated by the heating means 8, and water flowing through the heat storage pipe 15 is heated by the heat storage means 2. Hot water produced by the heating means 8 and hot water produced by the heat storage means 2 are mixed by the second flow rate adjusting means 11, and the mixed hot water flows into the hot water supply pipe 13.

Here, each of the plurality of latent heat storage materials (1a, 1b, 1c) is configured such that in the heat storing operation mode and the first heating operation mode, phase change of latent heat storage material located on an upstream side with respect to a flowing direction of water is completed before the phase change of the latent heat storage material located on a downstream side.

That is, in the heat storing operation mode, the heat storage means 2 is configured such in the plurality of latent heat storage materials (1a, 1b, 1c), phase change of the latent heat storage material having a low melting point is completed at the same time as or after phase change of the latent heat storage material having a high melting point. Further, in the first heating operation mode and the second heating operation mode, the heat storage means 2 is configured such that in the plurality of latent heat storage materials (1a, 1b, 1c), phase change of the latent heat storage material having a high melting point is completed at the same time as or after phase change of the latent heat storage material having a low melting point.

More specifically, the plurality of latent heat storage materials (1a, 1b, 1c) are configured to satisfy the following equation 1 in the heat storing operation mode and the first heating operation mode.

[Equation 1]

$$\frac{\rho_n \cdot V_n \cdot \Delta H_n}{G \cdot Cp \cdot |Ti_n - To_n|} \le \frac{\rho_{n+1} \cdot V_{n+1} \cdot \Delta H_{n+1}}{G \cdot Cp \cdot |Ti_{n+1} - To_{n+1}|}$$

Here, n represents n-th latent heat storage material in a flowing direction of water, ρ represents density (kg/L) of latent heat storage material, V represents capacity (L) of latent heat storage material, ΔH represents latent heat (kJ/kg) per unit weight of latent heat storage material, G represents a weight flow rate (kg/h) of water, Cp represents specific heat (kJ/(kg·K)) of water, Ti represents water temperature (°C) of the inlet of latent heat storage material, and To represents water temperature (°C) of the outlet of latent heat storage material. In the heat storage means 2, the latent heat storage materials (1a, 1b, 1c) are arranged side by side in this order. Therefore, outlet temperature Ton of n-th latent heat storage material and inlet temperature Tin+1 of n+1-th latent heat storage material are equal to each other.

A product of latent heat ΔH and weight ρV of the latent heat storage material shows heat storage capacity Q of the latent heat storage material. Further, a weight flow rate G of water and specific heat Cp of water, and a product of a temperature difference Ti-To between temperature (inlet temperature) of water of the inlet of the latent heat storage material and temperature (outlet temperature) of water of the outlet show a heat exchange amount P per unit time between heating medium and latent heat storage material. The heat exchange amount P can be adjusted by a heat transfer area between the latent heat storage material and heating medium, material of latent heat storage material, or a shape of a heating medium flow path.

From the above description, each of left and right sides of the equation 1 shows a value of heat storage capacity Q divided by a heat exchange amount P, and shows time elapsed until phase change of latent heat storage material is completed. By satisfying the equation 1, in the case of two adjacent latent heat storage materials in the heat storage means 2, phase change of one of the latent heat storage materials 1 which is located on the upstream side with respect to the flowing direction of water flowing through the heat storage means 2 is first completed. If the latent heat storage materials which configure the heat storage means 2 are configured to satisfy the relation of the equation 1, phase changes of the plurality of latent heat storage materials (1a, 1b, 1c) having the different melting points are completed from the upstream side with respect to the flowing direction of water. According to this, it is possible to execute the heat storing operation mode and the first heating operation mode while effectively using stored heat amounts of the latent heat storage materials (1a, 1b, 1c).

Here, in the adjacent two latent heat storage materials, heat storage capacity of the first latent heat storage material having a higher melting point is defined as Qh, and heat storage capacity of the second latent heat storage material having a lower melting point is defined as Ql. Further, in the heat storing operation mode or the first heating operation mode, a heat exchange amount per unit time between the first latent heat storage material and water is defined as Ph, and a heat exchange amount per unit time between the second latent heat storage material and water is defined as Pl. In the heat storing operation mode, Qh/Ph≤Ql/Pl is established. According to this, in the hot water generation device 100 of the second embodiment, melting time of the low melting point heat storage material 1c becomes the longest in the heat storing operation mode. In the first heating operation mode, Ql/Pl≤Qh/Ph is established. According to this, in the hot water generation device 100 of the second embodiment, solidification time of the high melting point heat storage material 1a becomes the longest in the first heating operation mode.

When the heat storage means 2 is configures using three or more latent heat storage materials (1a, 1b, 1c), most upstream side latent heat storage material with respect to the water flowing direction may be configured to satisfy the following equation as compared with the most downstream side latent heat storage material.

[Equation 2]

$$\frac{\rho_n \cdot V_n \cdot \Delta H_n}{G \cdot Cp \cdot \left|Tm_{n-1} - Tm_n\right|} \leq \frac{\rho_{n+1} \cdot V_{n+1} \cdot \Delta H_{n+1}}{G \cdot Cp \cdot \left|Tm_n - Tm_{n+1}\right|}$$

Here, Tm is a melting point (°C) of latent heat storage material. That is, a product of latent heat ΔH and weight ρV of the latent heat storage material shows heat storage capacity Q of the latent heat storage material. A flow rate G of water weight of water, sensible heat Cp of water, and a produce of temperature difference of melting points of the adjacent two latent heat storage materials show a heat exchange amount P' per unit time between heating medium and latent heat storage material. From the above-described fact, each of left and right sides of the equation 2 shows a value of heat storage capacity Q divided by a heat exchange amount P', and shows time elapsed until phase change of latent heat storage material is completed.

To satisfy the equation 1 or 2, as the high melting point heat storage material 1a, the heat storage means 2 of the second embodiment uses sodium acetate 3-hydrate having a melting point of 58°C is used. As the medium melting point heat storage material 1b, sodium sulfate 10-hydrate having a melting point of 32°C is used. Further, as the low melting point heat storage material 1c, mixture of sodium sulfate 10-hydrate having a melting point of 20°C and addition agent is used. When a total volume of the latent heat storage materials is defined as 1, a rate of volume occupied by the high melting point heat storage material 1a, the medium melting point heat storage material 1b and the low melting point heat storage material 1c are set to 38 vol%, 38 vol% and 24 vol%, respectively. Further, heat storage capacity Qa of the high melting point heat storage material 1a is about 264 kJ/kg, and heat storage circuit Qb of the medium melting point heat storage material 1b and heat storage capacity Qc of the low melting point heat storage material 1c are about 251 kJ/kb.

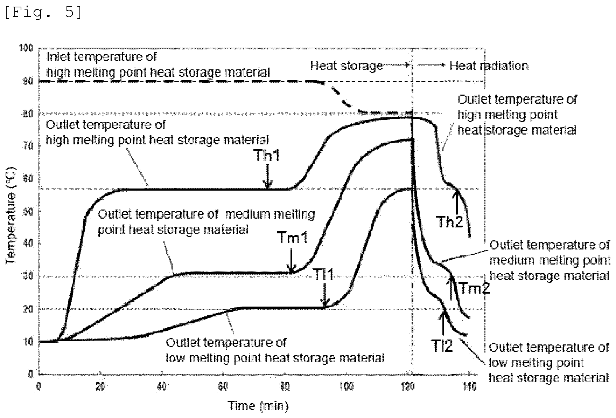

Fig. 5 shows temperature change when the heat storing operation mode is carried out using the heat storage means 2 and after the heat storing operation is completed, the operation is switched to the heat radiation operation (first heating operation mode). In the heat storing operation mode, inlet temperature of water flowing into the high melting point heat storage material 1a of the heat storage means 2 is set to 90°C, and the heat storing operation mode is carried out until outlet temperature of water flowing out from the low melting point heat storage material 1c reaches 60°C. In the first heating operation mode, inlet temperature of water flowing into the low melting point heat storage material 1c is set to 10°C, and the first heating operation mode is carried out until temperature of water flowing out from the high melting point heat storage material 1a reaches 40°C. Inlet temperature of water flowing into the high melting point heat storage material 1a is set to 90°C, and when the heat storing operation mode is completed, the inlet temperature is lowered to 80°C. In the first heating operation mode, inlet temperature of water flowing into the low melting point heat storage material 1c is set to 10°C, and the first heating operation mode is carried out until temperature of water flowing out from the high melting point heat storage material 1a reaches 40°C.

The heat storing operation mode shows the following temperature change.

First, the high melting point heat storage material 1a located on a most upstream side at the time of the heat storing operation mode rises in temperature together with flowing-in hot water while storing sensible heat. Therefore, outlet temperature of the high melting point heat storage material 1a also rises. If the high melting point heat storage material 1a enters a latent heat storage region, temperature does not rise and thus, the high melting point heat storage material 1a enters a latent heat region from its upstream side. Thereafter, if the entire high melting point heat storage material 1a enters the latent heat storage region, temperature is not changed and thus, outlet temperature of the high melting point heat storage material 1a does not rise also. At this time, if the heat storage efficiently proceeds, outlet temperature of the high melting point heat storage material 1a is substantially equal to the melting point of the high melting point heat storage material 1a. If the heat storage further proceeds, phase change of the high melting point heat storage material 1a is completed (time Th1), the high melting point heat storage material 1a enters a sensible heat storage region from the latent heat storage region, temperature of the high melting point heat storage material 1a again starts rising from its upstream side and according to this, outlet temperature of the high melting point heat storage material 1a also rises.

The medium melting point heat storage material 1b also takes the same processes as those of the high melting point heat storage material 1a. However, heating medium (water) flowing into the medium melting point heat storage material 1b is water after heat is radiated to the high melting point heat storage material 1a. Therefore, temperature (inlet temperature) of heating medium flowing into the medium melting point heat storage material 1b gradually rises in accordance with outlet temperature of the high melting point heat storage material 1a. Therefore, time when the medium melting point heat storage material 1b reaches the latent heat region is after the entire high melting point heat storage material 1a reaches the latent heat storage region. Hence, during that time, temperature rising speed of the medium melting point heat storage material 1b in the sensible heat storage region is small. Thereafter, the medium melting point heat storage material 1b is shifted to the latent heat storage region, and the outlet temperature becomes constant. Then, the medium melting point heat storage material 1b again enters the sensitive heat storage region and its temperature rises, but time when phase change is completed (time Tm1) is slower than the high melting point heat storage material 1a.

After the medium melting point heat storage material 1b is shifted to the latent heat storage region, the low melting point heat storage material 1c is also shifted to the latent heat storage region. Time when phase change of the low melting point heat storage material 1c is completed (time Tl1) is after the phase change of the medium melting point heat storage material 1b is completed.

As a result, temperature of heating medium (water) in the outlet of the low melting point heat storage material 1c is maintained equal to the melting point of the low melting point heat storage material 1c for about 90 minutes during whish heat storage in the latent heat region is completed. Thereafter, if the phase change of the low melting point heat storage material 1c is completed, temperature of heating medium (water) of the outlet of the low melting point heat storage material 1c starts rising, temperature of the heating medium of the outlet of the low melting point heat storage material 1c reaches 60°C, and heat storage is completed. A reason why outlet temperature of the low melting point heat storage material 1c is 60°C or higher is that even if the pump 9 is stopped to stop the circulation of heating medium (water) in the heating medium circuit 4, a slight amount of heating medium (water) further circulates, and heating medium remains in the flow path of heating medium provided in the low melting point heat storage material 1c and thus, heat exchanged is carried out.

In the heat storage process, if time during which the medium melting point heat storage material 1b or the high melting point heat storage material 1a melt (phase change) is longer than time during which the low melting point heat storage material 1c melts, the following phenomenon should appear. That is, after outlet temperature of the low melting point heat storage material 1c of the heat storage means 2 rises from the same temperature as the melting point of the low melting point heat storage material 1c, a temperature rising gradient becomes loose or gentle as the same temperature as the medium melting point heat storage material 1b or the high melting point heat storage material 1a. This result shows that the outlet temperature of the low melting point heat storage material 1c of the heat storage means 2 is substantially equal to the melting point of the low melting point heat storage material 1c and this state can be maintained for a long time.

According to this, times when the phase changes of the high melting point heat storage material 1a, the medium melting point heat storage material 1b and the low melting point heat storage material 1c are completed are Th1, Tm1 and Tl1 as shown in Fig. 5.

On the other hand, when heat is radiated, i.e., in the heating operation mode in which hot water is produced, heating medium is made to flow through from the low melting point heat storage material 1c to the high melting point heat storage material 1a opposite from that of the heat storing operation mode. Generally, water of a flow rate corresponding to demand is made to flow when hot water is used. That is, the flow rate is ten times of that when heat is stored.

At this time, the low melting point heat storage material 1c abruptly radiates heat and enters the latent heat region. Hence, outlet temperature of the low melting point heat storage material 1c abruptly decreases. If the low melting point heat storage material 1c enters the latent heat region, a temperature gradient becomes small, and if the phase change is completed (time Tl2), the region again becomes the sensible heat region, and abrupt temperature drop starts.

Since water which is heated by heat radiation of the low melting point heat storage material 1c flows into the medium melting point heat storage material 1b, temperature drop caused by the heat radiation of the medium melting point heat storage material 1b becomes more gentle than the low melting point heat storage material 1c. Thereafter, the medium melting point heat storage material 1b enters the latent heat region lag behind the low melting point heat storage material 1c. Since the low melting point heat storage material 1c radiates heat to water, completion (time Tm2) of the latent heat region of the medium melting point heat storage material 1b (phase change) is slower than completion (time Tl2) of latent heat region of the low melting point heat storage material 1c (phase change). Thereafter, the medium melting point heat storage material 1b again enters the sensible heat region and its temperature decreases.

Since water heated by heat radiation of the low melting point heat storage material 1c and the medium melting point heat storage material 1b flows into the high melting point heat storage material 1a, temperature drop of the high melting point heat storage material 1a is further delayed. Therefore, completion (time Th2) of the latent heat region of the high melting point heat storage material 1a (phase change) is slower than completion (time Tm2) of the latent heat region of the medium melting point heat storage material 1b (phase change) . Thereafter, the high melting point heat storage material 1a again enters the sensible heat region and temperature thereof decreases.

In this manner, the outlet temperature of the high melting point heat storage material 1a of the heat storage means 2 can be maintained equal to or higher than the melting point for a long time. Temperature of heating medium of the outlet of the low melting point heat storage material 1c reaches 60°C and heat storage is completed.

As described above, the hot water generation device 100 of the present invention is configured such that phase changes of the latent heat storage materials are completed in a downstream-proceeding order with respect to a flowing direction of water of the heat storage means 2.

Therefore, in the heat storing operation mode, phase change of the low melting point heat storage material 1c having the lowest melting point is completed lastly among the plurality of latent heat storage materials (1a, 1b, 1c). According to this, in the heat storing operation mode in which heat is stored by heat of the heating medium, heat of the heating medium can be stored in the heating medium without waste from a high temperature region to a low temperature region. As a result, in the hot water generation device 100 using the heat storage means 2 having the plurality of latent heat storage materials (1a, 1b, 1c) of the different melting points, heat can efficiently be stored in the heat storage means 2.

Further, in the heat storing operation mode, temperature of water flowing out from the heat storage means 2 can be maintained at a low level. Hence, temperature of water flowing into the heating means (heat pump device) 8 can be maintained at a low level. As a result, an enthalpy difference in the heating medium heat exchanger 3 can be increased and COP is enhanced.

In the first heating operation mode, phase change of the latent heat storage material 1a having the highest melting point is completed lastly among the plurality of latent heat storage materials (1a, 1b, 1c). According to this, it is possible to use up the latent heat of the latent heat storage materials (1b, 1c) of the low melting point. Hence an amount of heat stored in the heat storage means 2 can efficiently be utilized. As a result, it is possible to supply hot water having high temperature, to the end, to the heat utilizing terminal. In the second heating operation mode also, like the first heating operation mode, it is preferable that phase change of the latent heat storage material 1a having the highest melting point is completely lastly among the plurality of latent heat storage materials (1a, 1b, 1c).

In the second embodiment, in the heat storing operation mode and the first heating operation mode, phase changes are completed in the downstream-proceeding order with respect to a flowing direction of water of the heat storage means 2. However, it is only necessary that the phase change of the most downstream side latent heat storage material 1c is completed lastly. Hence, when the heat storage means 2 is configured using three or more latent heat storage materials (1a, 1b, 1c) having different melting points, it is only necessary that the relation of the equation 1 is satisfied between at least two downstream side latent heat storage material 1b and the latent heat storage material 1c.

Next, control of the heat storing operation mode will be described. Explanation of the same portions as those of the control of the heat storing operation mode in the first embodiment will be omitted.

The heat storage device 50 of the second embodiment includes the plurality of latent heat storage materials (1a, 1b, 1c) having different melting points. In the heat storing operation mode, the control device 25 first determines latent heat storage material as an object of heat storage. In winter when a using amount of hot water is relatively large, all of the plurality of latent heat storage materials (1a, 1b, 1c) are determined as heat storages, and in summer when a using amount of hot water is relatively small, and the latent heat storage materials (1b, 1c) having low melting points are determined as heat storages.

Especially in the steady action operation in the heat storing operation mode, the control device 25 sets target temperature (heating temperature) Tg of heating medium heated by the heating means 8, as temperature which is higher than the highest melting point (first melting point) among the melting points of the latent heat storage materials (1a, 1b, 1c) which are objects of heat storages by predetermined temperature (e.g., 10 to 20°C). Here, when the latent heat storage materials (1b, 1c) are determined as the objects of heat storages and the latent heat storage material 1a is not determined as an object of heat storage, it is preferable that the target temperature Tg is set lower than the first melting point of the latent heat storage material 1a, and set higher than the second melting point of the latent heat storage materials 1b. According to this, the latent heat storage material 1a which is not the object of the heat storage is restrained from exchanging heat in the latent heat region, and it is possible to prevent that heat is unnecessarily stored.

When the control device 25 decreases the heating temperature in accordance with a latent heat storage state of the latent heat storage materials (1a, 1b, 1c) in the heat storing operation mode, the heating temperature Tg is decreased within a temperature range higher than the first melting point. According to this, even if the heat storage means 2 is configured using the plurality of latent heat storage materials (1a, 1b, 1c) having different melting points, it is possible to appropriately store heat in the latent heat storage material which is an object of heat storage.

For example, assume that the medium melting point heat storage material 1b and the low melting point heat storage material 1c are set as objects of heat storage and heating medium is heated to temperature lower than a melting point of the high melting point heat storage material 1a and higher than the melting point of the medium melting point heat storage material 1b. Heat storage material (high melting point heat storage material 1a) located upstream of the latent heat storage materials (1b, 1c) which are objects of heat storage rises in temperature while storing sensitive heat, and the heating medium of the heat storage material becomes equal to that of heating medium which flows into the heat storage means 2. At this time, since temperature of the heating medium is lower than the melting point of the high melting point heat storage material 1a, the high melting point heat storage material 1a does not become the latent heat region.

On the other hand, the latent heat storage materials (1b, 1c) which are objects of heat storage thermally come into contact heating medium which is higher than the melting point in temperature and exchange heat and therefore, heat is stored first in the medium melting point heat storage material 1b which is located upstream. In this manner, the high melting point heat storage material 1a does not reach the latent heat region, the medium melting point heat storage material 1b and the low melting point heat storage material 1c reach the latent heat region and heat can be stored.

In this case also, the outlet temperature of the heating medium of the heat storage means 2 gradually rises, temperature of the heating medium which flows into the heat storage means 2 in the heat storing operation mode is decreased. According to this, in the heat storing operation mode, by reducing a flow rate of heating medium which flows into the heat storage means 2, the outlet temperature of the heating medium of the heat storage means 2 can be maintained at a low level. As a result, heat storage having excellent energy efficiency can be realized, and it is possible to provide the heat storage device 50 having the excellent energy saving performance and the hot water generation device 100.

[INDUSTRIAL APPLICABILITY]

The heat storage device and the hot water generation device provided with the heat storage device according to the present invention can efficiently store heat in the heat storage means using the latent heat storage materials. Therefore, the heat storage device and the hot water generation device can be applied to domestic and professional-use hot water supply device and hot water heating device.

[EXPLANATION OF SYMBOLS]

| | |
|---|---|
| 1 | latent heat storage material |
| 1a | high melting point heat storage material |
| 1b | medium melting point heat storage material |
| 1c | low melting point heat storage material |
| 2 | heat storage means |
| 3 | heating medium heat exchanger (radiator) |
| 4 | heating medium circuit |
| 5 | decompressing means (expansion valve) |
| 6 | heat source-side heat exchanger (evaporator) |
| 7 | compressor |
| 8 | heating means (heat pump device) |
| 9 | transfer means (pump) |
| 10 | first flow rate adjusting means |
| 11 | second flow rate adjusting means |
| 12 | water supply pipe |
| 13 | hot water supply pipe |
| 14 | heating pipe |
| 15 | heat storage pipe |
| 20 | first temperature detecting means |
| 21 | second temperature detecting means |

EP 3 121 522 B1

22    flow rate detecting means
25    control device
50    heat storage device
100   hot water generation device

## Claims

1.   A method for controlling a heat storage device (50) comprising:

a heat storage circuit (4) formed by annularly connecting, to each other through a pipe (14, 15), heat storage means (2) in which latent heat storage material (1, 1a, 1b, 1c) and heating medium exchange heat, and heating means (8) for heating the heating medium; and
a control device (25) for executing a heat storing operation mode, at least in which the heating medium is heated by the heating means (8) to predetermined heating temperature, and in which heat is transferred to the heat storage means (2) by the heated heating medium, wherein
in the heat storing operation mode,
the control device (25) determines a heat storage state in which sensible heat exchange is started at least in a portion of the latent heat storage material (1, 1a, 1b, 1c), in the heat storing operation mode using a temperature of the heating medium which flows out from the heat storage means (2) or elapsed time in the heat storing operation mode, and
when the heat storage state is determined, the control device (25) lowers heating ability of the heating means (8), **characterized in that** the heat storage means (2) includes a plurality of latent heat storage materials (1, 1a, 1b, 1c) having different melting points,
the heating medium flows through the heat storage means (2) in the heat storing operation mode such that heat exchange is carried out in the plurality of latent heat storage materials (1, 1a, 1b, 1c) in a melting point-lowering order,
in the heat storing operation mode,
the control device (25) controls the heating means (8) such that the heating temperature becomes higher than a highest first melting point among the melting points of the latent heat storage materials (1, 1a, 1b, 1c) which are objects of heat storage, and
when the heat storage state is determined, the control device (25) lowers heating ability of the heating means (8) such that the heating temperature does not become equal to or lower than the first melting point.

2.   The method according to claim 1, wherein when the heat storage state is determined, the control device (25) reduces a flow rate of the heating medium which flows into the heat storage means (2).

3.   The method according to claims 1 or 2, wherein the heating means (8) is a heat pump device formed by annularly connecting a compressor (7), a heating medium heat exchanger (3) in which refrigerant and the heating medium exchange heat, decompressing means (5), and a heat source-side heat exchanger (6) to one another through a refrigerant pipe (14, 15).

4.   A method for controlling a hot water generation device (100) comprising a heat storage device (50) which is controlled according to the controlling method of any one of claims 1 to 3, wherein
the control device (25) executes a heating operation mode in which the heating medium is heated by heat stored in the heat storage device (50), and in which the heated heating medium is supplied to a heat utilizing terminal.

## Patentansprüche

1.   Verfahren zur Regelung einer Wärmespeichervorrichtung (50), enthaltend:

einen Wärmespeicherkreislauf (4), der derart ausgebildet ist, dass Wärmespeichermittel (2), in welchen Latentwärmespeichermaterial (1, 1a, 1b, 1c) und ein Heizmedium Wärme austauschen, und Heizmittel (8) zum Erhitzen des Heizmediums ringförmig über eine Leitung (14, 15) miteinander verbunden sind; und
eine Regelvorrichtung (25) zum Durchführen eines Wärmespeicherbetriebsmodus, in welchem zumindest das Heizmedium durch die Heizmittel (8) auf eine vorbestimmte Heiztemperatur erwärmt wird, und in welchem Wärme durch das erwärmte Heizmedium auf die Wärmespeichermittel (2) übertragen wird, wobei

16

in dem Wärmespeicherbetriebsmodus,

die Regelvorrichtung (25) einen Wärmespeicherstatus, in welchem ein Eigenwärmeaustausch zumindest in einem Teil des Latentwärmespeichermaterials (1, 1a, 1b, 1c) gestartet ist, in dem Wärmespeicherbetriebsmodus unter Verwendung einer Temperatur des Heizmediums, welches aus den Wärmespeichermitteln (2) strömt, oder unter Verwendung der verstrichenen Zeit in dem Wärmespeicherbetriebsmodus bestimmt, und

wenn der Wärmespeicherstatus bestimmt ist, die Regelvorrichtung (25) das Heizvermögen der Heizmittel (8) senkt,

**dadurch gekennzeichnet, dass** die Wärmespeichermittel (2) eine Vielzahl von Latentwärmespeichermaterialien (1, 1a, 1b, 1c) mit unterschiedlichen Schmelzpunkten beinhalten,

dass das Heizmedium im Wärmespeicherbetriebsmodus derart durch die Wärmespeichermittel (2) strömt, dass ein Wärmeaustausch in der Vielzahl von Latentwärmespeichermaterialien (1, 1a, 1b, 1c) in einer absteigenden Reihenfolge der Schmelzpunkte durchgeführt wird,

dass in dem Wärmespeicherbetriebsmodus,

die Regelvorrichtung (25) die Heizmittel (8) derart regelt, dass die Heiztemperatur höher wird als ein höchster erster Schmelzpunkt der Schmelzpunkte der Latentwärmespeichermaterialien (1, 1a, 1b, 1c), welche Objekte des Wärmespeichers sind, und

dass wenn der Wärmespeicherstatus bestimmt ist, die Regelvorrichtung (25) das Heizvermögen der Heizmittel (8) derart senkt, dass die Heiztemperatur nicht gleich oder niedriger als der erste Schmelzpunkt wird.

2. Verfahren nach Anspruch 1, wobei, wenn der Wärmespeicherstatus bestimmt ist, die Regelvorrichtung (25) eine Strömungsgeschwindigkeit des Heizmediums, welches in die Wärmespeichermittel (2) strömt, reduziert.

3. Verfahren nach Anspruch 1 oder 2, wobei das Heizmittel (8) eine Wärmepumpenvorrichtung ist, die derart ausgebildet ist, dass sie einen Verdichter (7), einen Heizmediumwärmetauscher (3), in welchem ein Kühlmittel und das Heizmedium Wärme austauschen, Dekomprimierungsmittel (5), und einen wärmequellenseitigen Wärmetauscher (6) ringförmig miteinander durch eine Kühlmittelleitung (14, 15) verbindet.

4. Verfahren zur Regelung einer Warmwasserbereitungsvorrichtung (100), enthaltend: eine Wärmespeichervorrichtung (50), welche nach dem Regelungsverfahren nach einem der Ansprüche 1 bis 3 geregelt wird, wobei die Regelvorrichtung (25) einen Heizbetriebsmodus durchführt, in welchem das Heizmedium durch die in der Wärmespeichervorrichtung (50) gespeicherte Hitze erhitzt wird, und in welchem das erwärmte Heizmedium einem wärmenutzenden Endgerät zugeführt wird.

**Revendications**

1. Procédé de pilotage d'un dispositif d'accumulation de chaleur (50) comprenant :

un circuit d'accumulation de chaleur (4) formé par raccordement annulaire, les uns aux autres par l'intermédiaire d'un tuyau (14, 15), de moyens d'accumulation de chaleur (2) dans lesquels un matériau d'accumulation de chaleur latente (1, 1a, 1b, 1c) et un milieu de chauffage échangent de la chaleur, et des moyens de chauffage (8) pour chauffer le milieu de chauffage ; et

un dispositif de pilotage (25) pour exécuter un mode de fonctionnement d'accumulation de chaleur, au moins dans lequel le milieu de chauffage est chauffé par le moyen de chauffage (8) à une température de chauffage prédéterminée, et dans lequel de la chaleur est transférée aux moyens d'accumulation de chaleur (2) par le milieu de chauffage chauffé, dans lequel

dans le mode de fonctionnement d'accumulation de chaleur,

le dispositif de pilotage (25) détermine un état d'accumulation de chaleur dans lequel un échange de chaleur sensible est démarré au moins dans une partie du matériau d'accumulation de chaleur latente (1, 1a, 1b, 1c), dans le mode de fonctionnement d'accumulation de chaleur à l'aide d'une température du milieu de chauffage qui s'écoule hors des moyens d'accumulation de chaleur (2) ou du temps écoulé dans le mode de fonctionnement d'accumulation de chaleur, et

lorsque l'état d'accumulation de chaleur est déterminé, le dispositif de pilotage (25) abaisse la capacité de chauffage des moyens de chauffage (8),

**caractérisé en ce que** les moyens d'accumulation de chaleur (2) comprennent une pluralité de matériaux d'accumulation de chaleur latente (1, 1a, 1b, 1c) présentant des points de fusion différents,

le milieu de chauffage s'écoule à travers les moyens d'accumulation de chaleur (2) dans le mode de fonctionnement d'accumulation de chaleur de telle sorte que l'échange de chaleur est effectué dans la pluralité de matériaux d'accumulation de chaleur latente (1, 1a, 1b, 1c) dans un ordre de point de fusion descendant, dans le mode de fonctionnement d'accumulation de chaleur,
le dispositif de pilotage (25) pilote les moyens de chauffage (8) de telle sorte que la température de chauffage devient supérieure à un premier point de fusion le plus élevé parmi les points de fusion des matériaux d'accumulation de chaleur latente (1, 1a, 1b, 1c) qui sont des objets d'accumulation de chaleur, et
lorsque l'état d'accumulation de chaleur est déterminé, le dispositif de pilotage (25) abaisse la capacité de chauffage des moyens de chauffage (8) de telle sorte que la température de chauffage ne devienne pas égale ou inférieure au premier point de fusion.

2. Procédé selon la revendication 1, dans lequel, lorsque l'état d'accumulation de chaleur est déterminé, le dispositif de pilotage (25) réduit un débit du milieu de chauffage qui s'écoule dans le moyen d'accumulation de chaleur (2).

3. Procédé selon les revendications 1 ou 2, dans lequel les moyens de chauffage (8) sont un dispositif de pompe à chaleur formé par raccordement annulaire d'un compresseur (7), d'un échangeur de chaleur à milieu de chauffage (3) dans lequel un fluide frigorigène et le milieu de chauffage échangent de la chaleur, de moyens de décompression (5), et d'un échangeur de chaleur côté source de chaleur (6) les uns aux autres par l'intermédiaire d'un tuyau de fluide frigorigène (14, 15).

4. Procédé de pilotage d'un dispositif de production d'eau chaude (100) comprenant un dispositif d'accumulation de chaleur (50) qui est piloté selon le procédé de pilotage selon l'une quelconque des revendications 1 à 3, dans lequel le dispositif de pilotage (25) exécute un mode de fonctionnement de chauffage dans lequel le milieu de chauffage est chauffé par la chaleur stockée dans le dispositif d'accumulation de chaleur (50), et dans lequel le milieu de chauffage chauffé est fourni à un terminal d'utilisation de chaleur.

[Fig. 1]

| | |
|---|---|
| 1  Latent heat storage material | 13  Hot water supply pipe |
| 2  Heat storage means | 14  Heating pipe |
| 3  Heating medium heat exchanger | 15  Heat storage pipe |
| 4  Heating medium circuit | 20  First temperature detecting means |
| 5  Decompressing means | 21  Second temperature detecting means |
| 6  Heat source-side heat exchanger | 22  Flow rate detecting means |
| 7  Compressor | 25  Control device |
| 8  Heating means | 50  Heat storage device |
| 9  Pump | 100  Hot water generation device |
| 10  First flow rate adjusting means | |
| 11  Second flow rate adjusting means | |
| 12  Water supply pipe | |

[Fig. 2]

**(a)**

**(b)**

[Fig. 3]

```
                          ┌──────────────┐
                          │    Start     │
                          └──────┬───────┘
┌─────────────────────────────────────────────────────────────────┐
│ Initial operation                                                 │
│                          ┌────────────────────────────┐           │
│                     S1   │ Start initial operation of  │           │
│                          │ heating means and pump      │           │
│                          │ (initial flow rate)         │           │
│                          └──────────────┬──────────────┘           │
│        S4          S2          Detected flow rate≥                 │
│   ┌──────────┐         <  predetermined flow rate F1 >── Yes       │
│   │ Increase │            No                                        │
│   │ flow rate│              │                                       │
│   └──────────┘         S3   Detected temperature of                │
│       Yes      <  first temperature detecting means≥T1 >── No      │
└─────────────────────────────────────────────────────────────────┘
┌─────────────────────────────────────────────────────────────────┐
│ Steady operation                                                  │
│                          ┌────────────────────────────┐           │
│                     S5   │ Start steady operation of   │           │
│                          │ heating means and pump      │           │
│                          └──────────────┬──────────────┘           │
│                     S6     Detected temperature of                 │
│                    <  second temperature detecting means≥Te >─ Yes │
│                            No                                       │
└─────────────────────────────────────────────────────────────────┘
┌─────────────────────────────────────────────────────────────────┐
│                                              Stop operation        │
│        No      S7    Detected temperature of                       │
│           <  second temperature detecting means≥T2 >               │
│                            Yes                                      │
│                     S8     Detected temperature of                 │
│                    <  first temperature detecting means≥T4 >── No   │
│                            Yes                                      │
│                     S9   Heating ability≥                          │
│                    <  predetermined heating ability >── No          │
│    S10                     Yes                                      │
│   ┌──────────────┐                                                 │
│   │ Reduction in │                                                 │
│   │ heating      │                                                 │
│   │ ability      │                                                 │
│   └──────────────┘   S11                                           │
│    S12                   Detected flow rate≥                       │
│   ┌──────────────┐  <  predetermined flow rate F2 >                │
│   │ Reduction    │    Yes                                          │
│   │ in flow rate │            No                                    │
│   └──────────────┘                                                 │
│                     S13  ┌────────────────────────────┐           │
│                          │ Stop heating means and pump │           │
│                          └──────────────┬──────────────┘           │
└─────────────────────────────────────────────────────────────────┘
                          ┌──────────────┐
                          │     End      │
                          └──────────────┘
```

[Fig. 4]

1a  High melting point heat storage material
1b  Medium melting point heat storage material
1c  Low melting point heat storage material

[Fig. 5]

**EP 3 121 522 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5833097 B
- JP 3903804 B
- US 20140060794 A